# DEMANDE DE BREVET EUROPEEN

(11) **EP 0 599 698 A1**
(43) Date de publication de la demande: **01.06.1994**
(21) Numéro de dépôt: 93402786.3
(22) Date de dépôt: 17.11.1993
(51) Int. Cl.: B60S 1/34, B60S 1/44, B60S 1/06

(54) **Essuie-glace pour pare-brise de véhicules**

(30) Priorité: 20.11.1992 FR 9213936
(71) Demandeur: Millardet, Renaud, Daniel, Claude, F-77910 Germigny l'Eveque (FR)
(72) Inventeur: Millardet, Renaud, Daniel, Claude, F-77910 Germigny l'Eveque (FR)
(74) Mandataire: Vander-Heym, Serge

(57) **Abrégé**

Essuie-glace pour véhicules, caractérisé en ce que le balai d'essuie-glace s'étend sur toute la hauteur du pare-brise et peut être déplacé, parallèlement à lui-même, à partir d'un organe d'entraînement disposé derrière ledit pare-brise.

Le bras du balai est rendu solidaire d'un chariot (3a) comportant une masse aimantée (4) susceptible de coopérer avec un second chariot (3b) disposé derrière le pare-brise (1) et comportant aussi une masse aimantée (4).

Le chariot menant (3b) est astreint à suivre une trajectoire épousant le contour de l'un des côtés du pare-brise et est animé d'un mouvement alternatif.

## Description

La présente invention est relative à des perfectionnements aux essuie-glace pour pare-brise de véhicules.

Dans sa forme la plus simple, un essuie-glace est constitué par un bras pivotant par l'une de ses extrémités et comportant à l'autre une raclette, réalisée en une matière élastiquement déformable, ou balai, appliquée contre le pare-brise. On utilise généralement deux balais.

On sait qu'un pare-brise a généralement un contour rectangulaire, voire légèrement trapézoïdal. De ce fait, les balais ne peuvent pas couvrir toute la surface du pare-brise.

A cet inconvénient s'ajoute le fait que l'axe d'entraînement du bras de l'essuie-glace doit traverser la carrosserie ce qui pose nécessairement des problèmes d'étanchéité.

La présente invention, qui remédie à ces inconvénients, est remarquable en ce que le balai d'essuie-glace s'étend sur toute la hauteur du pare-brise et peut être déplacé parallèlement à lui-même à partir d'un organe d'entraînement disposé derrière le pare-brise de façon à balayer toute la surface utile.

Le bras du balai est rendu solidaire d'un chariot, comportant une masse aimantée susceptible de coopérer avec un second chariot disposé derrière le pare-brise et comportant aussi une masse aimantée, ledit second chariot étant guidé de façon à suivre une trajectoire épousant le contour de l'un des côtés du pare-brise, des moyens étant prévus pour déplacer ledit second chariot, ou chariot menant, selon un mouvement alternatif.

De ce fait, le chariot menant, situé à l'intérieur du véhicule, entraîne dans son déplacement le chariot qui porte le balai d'essuie-glace et, ce, sans liaison mécanique entre eux.

De préférence, chaque chariot est guidé sur un rail fixé contre le pare-brise, par exemple par collage, les deux rails étant disposés en vis-à-vis et situés vers le bord supérieur du pare-brise.

La présente invention sera mieux comprise par la description qui va suivre faite en se référant au dessin annexé, à titre d'exemple indicatif seulement, sur lequel :
- la figure 1 est une vue en coupe transversale du dispositif de l'invention;
- la figure 2 est la vue en élévation d'un chariot, sa face située vers le pare-brise étant disposée en avant;
- la figure 3 est la vue de dessus de la figure 2, le chariot étant partiellement coupé selon la ligne III-III de ladite figure 2.

En se reportant au dessin on voit que le pare-brise du véhicule est désigné par la référence générale 1, sa face externe étant désignée par la et celle interne par 1b.

Sur les faces 1a et 1b sont fixés, par collage, des rails identiques 2.

Sur les rails 2 peuvent coulisser des chariots 3, respectivement externe 3a et interne 3b, comportant une masse magnétique constituée, dans l'exemple représenté, par quatre aimants permanents 4 réunis magnétiquement par une plaque de champ 5. Les aimants 4 et la plaque 5 sont noyés dans le chariot 3 qui est réalisé en une matière amagnétique tel qu'un alliage d'aluminium.

Les deux chariots sont donc attirés l'un vers l'autre à travers le pare-brise et on comprend que le déplacement du chariot 3b détermine celui du chariot 3a.

Sur le chariot 3a est fixée la partie supérieure d'un bras 6 comportant un balai d'un type connu, non représenté. Lorsque le chariot 3a se déplace, entraîné par celui 3b, le balai fixé au bras 6 se déplace parallèlement à lui-même et couvre une surface rectangulaire si les rails 2 sont rectilignes. Cette surface est égale à celle du pare-brise 1.

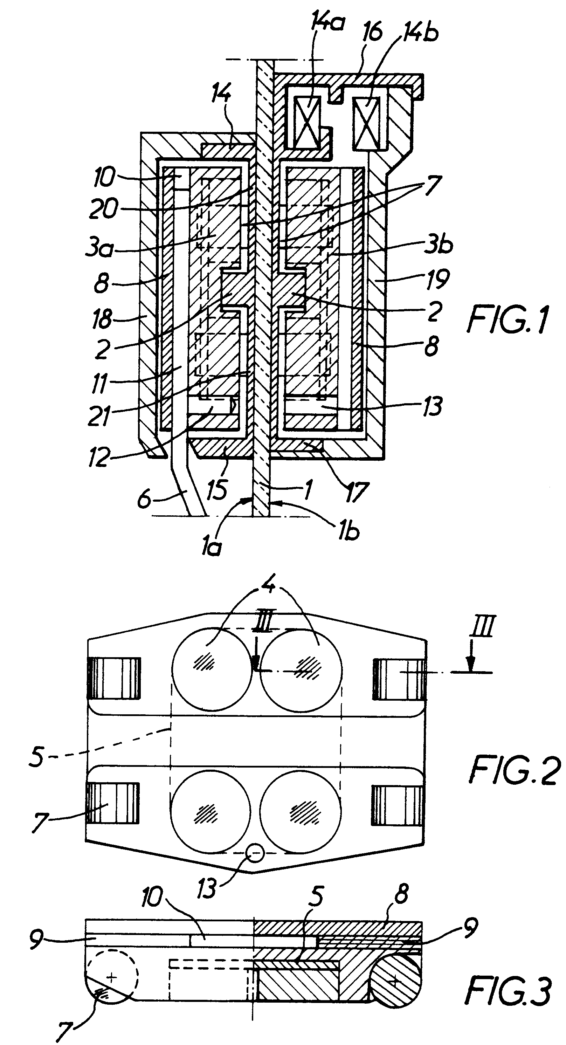

Lorsque le contour du pare-brise est trapézoïdal, les extrémités du rail 2, situé à l'extérieur, sont incurvées pour faire pivoter légérement le chariot de sorte qu'en fin de course le bras 6 s'étende sensiblement parallèlement au côté latéral correspondant du dit pare-brise. Dans le cas de la figure 1, où les rails 2 sont situés à proximité du bord supérieur du pare-brise et où le pare-brise trapézoïdal est plus étroit à sa partie supérieure, le rail 2, extérieur, s'incurve vers le haut à ses extrémités.

Chaque chariot est pourvu de galets 7 susceptibles de rouler contre les faces 1a et 1b du pare-brise. Ces galets sont réalisés en une matière plastique non agressive pour le pare-brise. Le diamètre des galets 7 peut varier d'un chariot à l'autre selon que le chariot est disposé à l'extérieur ou à l'intérieur, le diamètre des galets du chariot 3b pouvant être plus faible que celui des galets du chariot 3a.

Sur la face du chariot opposée à celle comportant les aimants 4, on fixe une plaque 8 avec interposition de deux blocs 9, réalisés en une matière élastiquement déformable, ladite face, la plaque 8 et les champs desdits blocs délimitant un logement 10.

Si on considère le chariot la, on voit que le logement 10 est utilisé pour recevoir une extension 11 du bras 6 qui présente, à sa partie supérieure, un doigt 12 engagé dans un alésage 13 situé à la partie inférieure du chariot. Le logement 10 est comblé par l'extension 11 qui peut pivoter en comprimant l'un ou l'autre des blocs 9. Ce système de fixation permet d'absorber les éventuelles vibrations.

Selon une caractéristique de l'invention, les chariots la et 1b sont identiques et disposés symétriquement par rapport au pare-brise. Le logement 10 et l'alésage 13 du chariot 1b sont alors utilisés pour recevoir un organe d'entraînement (non représenté) similaire à celui formé par l'extension 11 et le doigt 12.

Le chariot 1b peut être lié par l'organe d'entraînement précité à une chaîne sans fin, ou analogue, dont les brins sont schématisés en 14a et 14b, ladite chaîne s'enroulant sur deux pignons (non représentés) situés vers les extrémités de la trajectoire alternative du chariot 3b, l'un des pignons étant entraîné par un moteur électrique par l'entremise d'un dispositif de transmission. Les organes d'entraînement du pignon de chaîne n'ont pas pas été représentés car la localisation de ceux-ci est liée aux formes du véhicule, de plus, l'homme de l'art sait entraîner un pignon de façon alternative.

Selon un mode de réalisation, de part et d'autre de chaque rail 2 sont disposées des ailes respectivement 14 et 15, à l'extérieur, et 16 et 17 à l'intérieur. Ces ailes sont utilisées pour fixer des capots de protection respectivement 18 et 19.

Les ailes précitées doivent être convenablement positionnées par rapport au rail 2 correspondant. De ce fait, les ailes et le rail correspondant sont réunis par deux minces bandes de matière respectivement 20 et 21. Les bandes 20 et 21 peuvent être prédécoupées au voisinage des organes qu'elle réunissent de façon à être facilement éliminées après fixation par collage du rail et des ailes et, ce, de façon à réduire la valeur de l'entrefer entre les masses magnétiques disposées de part et d'autre du pare-brise.

Comme cela ressort du dessin, l'aile 16 et la partie supérieure du capot 19 sont conformées de façon à former un guide chaîne.

Le capot 18 peut s'étendre le long de l'un des côtés adjacent du pare-brise de façon à former un logement de réception du bras 6 et de son balai lorsque l'essuie-glace est au repos.

## Revendications

**1-**Essuie-glace pour véhicules, caractérisé en ce que le balai d'essuie-glace s'étend sur toute la hauteur du pare-brise et peut être déplacé, parallèlement à lui-même, à partir d'un organe d'entraînement disposé derrière ledit pare-brise de façon à balayer toute la surface utile.

**2-**Essuie-glace selon la revendication 1, caractérisé en ce que le bras du balai est rendu solidaire d'un chariot (3a) comportant une masse aimantée (4) susceptible de coopérer avec un second chariot (3b) disposé derrière le pare-brise (1) et comportant aussi une masse aimantée (4).

**3-**Essuie-glace selon la revendication 2, caractérisé en ce que le chariot menant (3b) est astreint à suivre une trajectoire épousant le contour de l'un des côtés du pare-brise et est animé d'un mouvement alternatif.

**4-**Essuie-glace selon la revendication 3, caractérisé en ce que le chariot menant (3b) est guidé sur un rail (2) fixé contre la face interne (1b) du pare-brise.

**5-**Essuie-glace selon la revendication 4, caractérisé en ce que les deux chariots sont identiques.

**6-**Essuie-glace selon l'une quelconque des revendications 4 et 5, caractérisé en ce que le chariot mené (3a) est guidé sur un rail (2) fixé contre la face externe (1a) du pare-brise.

**7-**Essuie-glace selon l'une quelconque des revendications 1 à 6, caractérisé en ce la fixation du bras porte-balai (6) au chariot (3a) s'effectue par l'entremise d'un dispositif susceptible d'absorber les vibrations.

**8-**Essuie-glace selon l'une quelconque des revendications 1 à 7, caractérisé en ce que chaque chariot comporte une pluralité d'aimants permanents (4) réunis par une plaque de champ (5) réalisée en un matériau magnétique.

**9-**Essuie-glace selon l'une quelconque des revendications 1 à 8, caractérisé en ce que des ailes (14-15 et 16-17) sont disposées de part et d'autre du rail (2) correspondant et sont utilisées pour fixer des capots (18 et 19).

**10-**Essuie-glace selon la revendication 9 caractérisé en ce que les ailes sont réunies au rail correspondant par deux minces bandes de matière (20 et 21) pouvant être ôtées après collage desdites ailes et du rail.
